# EUROPEAN PATENT SPECIFICATION

(11) **EP 0 548 778 B1**
(45) Date of publication and mention of the grant of the patent: **09.07.1997**
(21) Application number: 92121404.5
(22) Date of filing: 16.12.1992
(51) Int. Cl.: E05D 11/10, B60K 15/05

(54) **Screening means for a space housing the filler pipe of a vehicle**
Verschlussdeckel für einen die Fülleinrichtung umfassenden Raum bei Fahrzeugen
Couvercle pour l'espace comportant le tuyau de remplissage d'une voiture

(30) Priority: 20.12.1991 IT TO910317 U
(43) Date of publication of application: 30.06.1993
(73) Proprietor: FIAT AUTO S.p.A., 10135 Torino (IT)
(72) Inventor: Annichini, Giovanni, 10100 Torino (IT); Zandonella Necca, Dino, 30038 Spinea (IT)
(74) Representative: Plebani, Rinaldo

(56) References cited:
- EP-A- 0 007 104
- EP-A- 0 310 084
- BE-A- 543 653
- GB-A- 2 080 409

## Description

This innovation relates to means for screening a space housing the filler pipe of a vehicle, in particular for refueling.

Filler pipes for the refueling of a vehicle located within spaces which are closed off by corresponding doors, and filler pipes whose ends terminate directly flush with the coachwork of the vehicle, are known in the art. In both cases the filler pipes are closed by a cap when the vehicle is in normal use, which is sometimes provided with a safety lock, and which in the latter case is preferably flush with the end of the filler pipe and therefore with the coachwork of the vehicle.

The two arrangements just described are not however without disadvantages. In the first case, see e.g. EP-A-0 007 104 or EP-A-0 310 034, the door which closes off the space sometimes does not allow the vehicle to be refuelled conveniently, because of its reduced angle of opening, particularly so with modern fuel delivery nozzles which are larger in size than those used previously. Moreover also the hinging devices of the door are very bulky.
Secondly the requirement for a filler pipe of greater diameter than those previously in use, so that it can comfortably accept modern fuel delivery nozzles, is contrary to aesthetic requirements according to which these means for the refuelling of the vehicle should not be very apparent or should even be hidden.

The object of this innovation is to provide means for screening a space housing a filler pipe for a vehicle which overcomes the aforementioned disadvantages and which allows the vehicle to be refuelled conveniently even with modern delivery nozzles which are larger than those previously in use.

In accordance with this innovation screening means for the space housing a vehicle filler pipe are provided, of the type as claimed in Claim 1.

For a better understanding of the invention a non-restrictive description of an embodiment will now be provided with reference to the appended drawings, in which:
Figure 1 shows a view in lateral elevation of screening means for a space housing a filling pipe for a vehicle constructed in accordance with this innovation,
Figure 2 shows a view in cross-section along a plane of line II-II on the screening device illustrated in Figure 1 in the closed position,
Figure 3 shows a view in cross-section along a plane of line II-II on the screening device illustrated in Figure 1 in the open position.

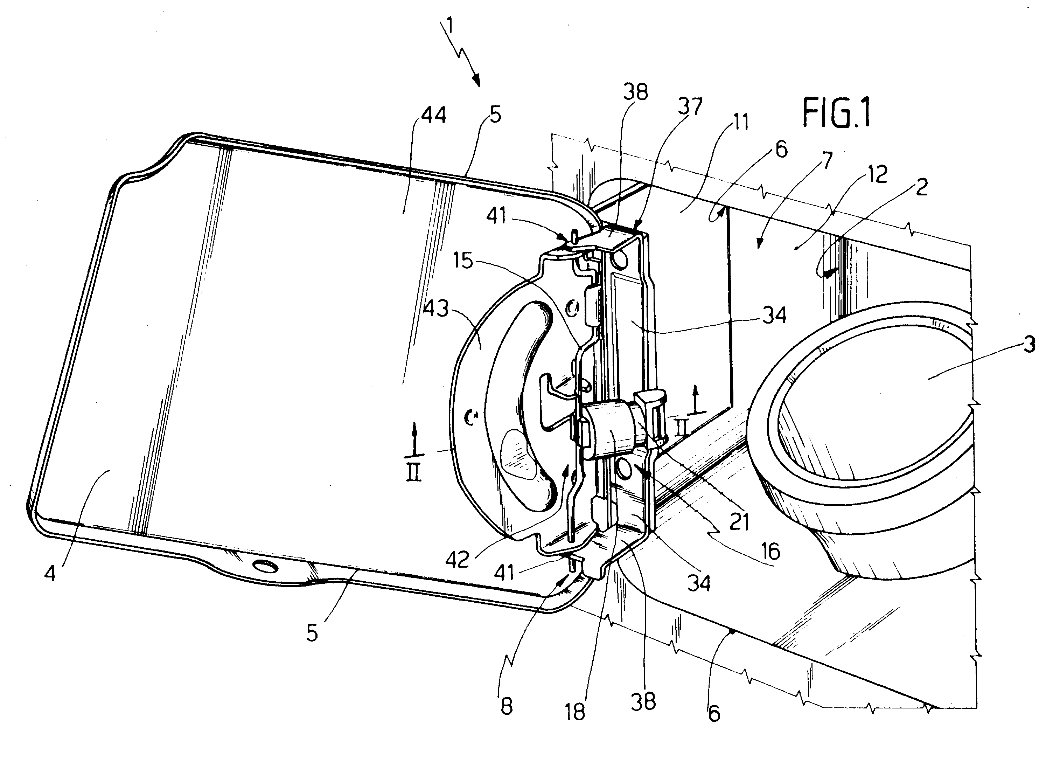

With reference to Figures 1 to 3, 1 indicates screening means for a space 2 housing a filler pipe 3 for a vehicle, which is known and not illustrated in the figures for the sake of simplicity, constructed in accordance with this innovation.

Screening means 1 comprises a door 4 having an outside shape 5 which is substantially identical to the corresponding perimeter 6 bounding an opening 7 to space 2 and also comprises corresponding means 8 hinging door 4 to a supporting bracket 11 integrally fixed to an internal side wall 12 of space 2 which allows door 4 to adopt selectively a first working position 13 in which door 4 is flush with opening 7 to space 2, closing it off, and a second working position 14 in which door 4 opens through an angle substantially greater than 90° and projects alongside space 2 where, when in use, it provides access to filler pipe 3.

In accordance with this innovation hinge means 8 comprise a pin 15 for the rotatable attachment about a predetermined axis of door 4 to supporting bracket 11, and bistable elastic means 16 capable of locating and holding door 4 in the second working position 14 with a corresponding angle of opening substantially in excess of 90°.

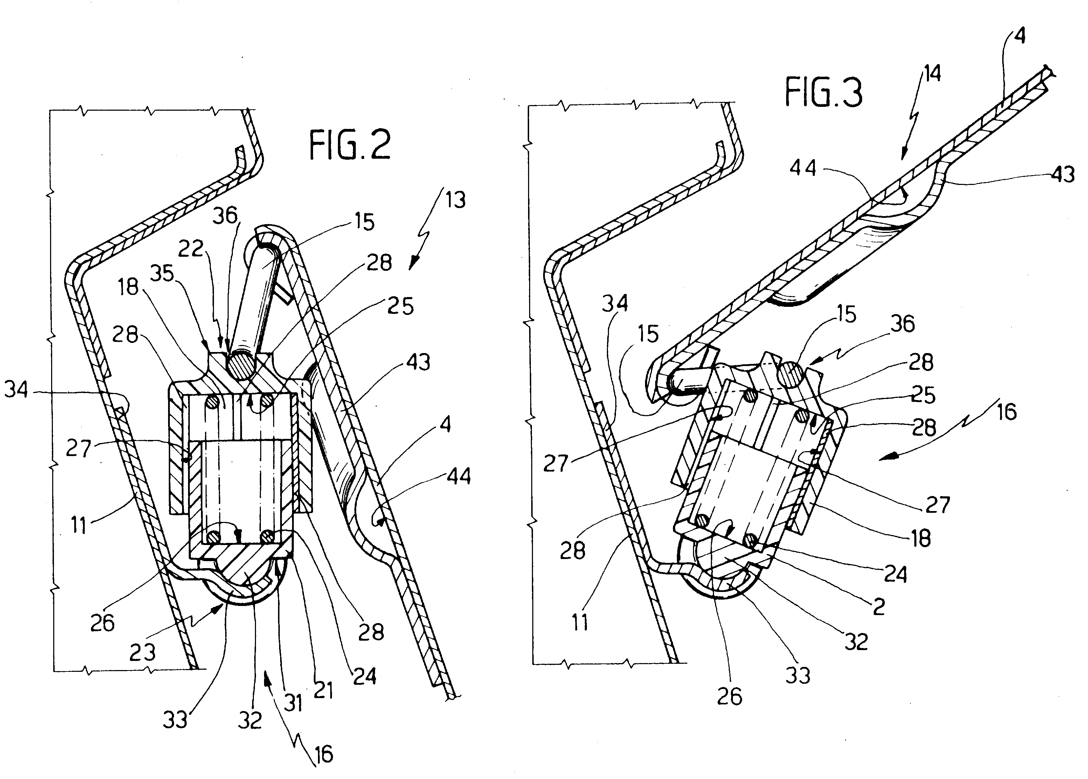

With particular reference to Figures 2 and 3, bistable elastic means 16 comprise a first outer bush 18 and a second inner bush 21 which act together and are connected together by means of corresponding hinges 22 and 23 to pin 15 and supporting bracket 11. Elastic means 16 also comprise a spring 24 placed between bush 18 and bush 21.

In accordance with the invention inner bush 21 is inserted telescopically with freedom of movement within outer bush 18 in such a way that it can adopt corresponding oblique positions with corresponding axes of symmetry, which are not shown in the figures for the sake of simplicity, which form between them an angle which is not a flat angle. Spring 24 is housed within outer bush 18 and inner bush 21 and acts against base walls 25 and 26 respectively of bushes 18 and 21.

On an inner lateral surface 27 thereof facing inner bush 21 outer bush 18 has a plurality of projections 28 in a substantially equally spaced arrangement on aforesaid inner surface 27, these projections 28 having corresponding substantially semicircular profiles in transverse cross-section, which is not shown in the appended figures.

On an outer face 31 of its base wall 26, opposite door 4, inner bush 21 is provided with a projection 32, of a half-barrel shape, which acts together with a corresponding concave support 33 which projects from a supporting bracket 34 integrally fixed to bracket 11.

On an outer face 35 of its base wall 25 outer bush 18 has corresponding means of attachment 36 which act together with and snap onto pin 15.

In accordance with this innovation two folded back ears 38 in which corresponding holes 41 are provided for housing pin 15, are provided at the corresponding opposite ends 37 of bracket 34.

Pin 15 is shaped in an intermediate portion 42 opposite outer bush 18 in such a way that it is substantially lifted by door 4 and acts as a support for outer bush 18 itself. A plate 43 which is integrally fixed to an inner face 44 of door 4 and allows the latter to open and close is also hinged on pin 15.

In use outer bush 18 acts together with intermediate portion 42 of pin 15 while inner bush 21 acts together with concave support 33 and spring 24 acts as a reaction member between the two bushes 18 and 21, acting on inner base walls 25 and 26, contributing to holding door 4 in position in one of the two operating positions 13 or 14 in which the door is closed or open respectively.

The advantages associated with this innovation are obvious from what has been described: the possibility of opening the door through an angle greater than 90° allows easy access to the filler pipe for refuelling the vehicle, even when modern delivery nozzles which are larger in size than those previously in use are used.

## Claims

1. Means (1) for screening a space (2) housing a filler pipe (3) for a vehicle, of the type comprising a door (4) having the shape of an opening (7) to the said space (2) and means (8) hinging the door (4) to a supporting member (11), said hinge means (8) being such as to enable the said door (4) to adopt selectively a first operating position (13) in which the door (4) is flush with the said opening (7) to the said space (2), closing it off, and a second operating position (14) in which the door (4) projects to the side of the said space (2) to reveal the said filler pipe (3); said hinge means (8) comprising one pin (15) for rotatably attaching about a predetermined axis the said door (4) to the said supporting member (11), and elastic means (16) for locating said door (4);
characterized in that, in combination:
(i)- said elastic means (16) are bistable, comprising an outer bush (18), an inner bush (21) inserted telescopically within the outer bush (18) and a spring (24) housed within both the inner and outer bush (21,18) and acting together on opposite sides against the corresponding base walls (25,26) of said bushes (18,21);
(ii)- said supporting member (11) is integral with a side wall (12) of the said space (2) and support a first bracket (34) having at its opposite ends (37) two folded back ears (38) provided with corresponding holes (41) for housing corresponding ends of said pin (15);
(iii)- said pin (15) is formed by a bent-back bar supported by a second supporting member (43) integrally fixed to the said door (4), said bar (15) having an intermediate portion (42) which is bent back and raised with respect to an internal face (44) of said door (4); and
(iv)- said outer bush (18) and inner bush (21) being inserted between said bar (15) and a concave support (33) projecting from said first bracket (34), the said inner bush (21) cooperating in hinging fashion with said concave support (33) and said outer bush (18) cooperating in hinging fashion with said bar (15), said intermediate bent-back portion (42) thereof acting as a support for said outer bush (18);
so as that said door (4), in said second operating position, is located by said bistable elastic means (16) with a corresponding angle of opening substantially in excess of 90°.

2. Screening means (1) according to Claim 1, characterized in that said outer (18) and inner (21) bush are inserted one into the other with freedom of movement, in such a way that they can adopt relative oblique positions with corresponding axes of symmetry which form an angle between them.

3. Screening means (1) according to Claim 1 or 2, characterized in that said outer bush (18) has on an internal lateral surface (27) thereof which faces the said inner bush (21) a plurality of projections (28) in a substantially equally spaced arrangement upon the said inner surface (27), the said projections having corresponding substantially semicircular cross-sections.

4. Screening means (1) according to one of the foregoing Claims, characterized in that said inner bush (21) is provided on an outer surface (31) of its base wall (26) with corresponding means (32) of attachment to said first bracket (34), the said outer bush (18) being provided on an outer face (35) of its base wall (25) with corresponding means (36) of attachment to said second supporting member (43).

5. Screening means (1) according to Claim 4, characterized in that said first supporting member consists of a second bracket (11) fixed within the said housing space (2) and integrally connected to said first bracket (34); and in that said concave support (33) projects from said first bracket (34) and acts together with a corresponding half-barrel shaped projection (32) provided on said outer face (31) of the said base wall (26) of said inner bush (21).

6. Screening means (1) according to one of the foregoing Claims, characterized in that said second supporting member (43) consists of a plate (43) integrally fixed to said door (4) and supporting said bent-back bar (15) forming said pin.

## Patentansprüche

1. Mittel zum Abdecken eines einen Einfüllstutzen (3) eines Fahrzeugs aufnehmenden Raumes (2), umfassend eine Klappe (4) mit dem Umriß einer Zugangsöffnung (7) zu dem Raum (2) und Mittel (8), die die Klappe (4) an ein Trägerteil (11) anlenken, wobei das Anlenkmittel (8) ausgebildet ist, um es der Klappe (4) zu ermöglichen, wahlweise eine erste Betriebslage (13), in der die Klappe bündig mit der Zugangsöffnung (7) zu den Raum (2), diese abdeckend, abschließt, und eine zweite Betriebslage (4) einzunehmen, in der die Klappe (4) von der Seite des Raumes (2) abragt, um den Einfüllstutzen (3) freizugeben, wobei das Anlenkmittel (8) einen Stift (15) zur drehbaren Befestigung der Tür um eine vorbestimmte Achse an das Trägerteil (11) sowie elastische Mittel (16) zum Festlegen der Klappe (4) umfaßt, dadurch gekennzeichnet, daß in Kombination:
(i) die elastischen Mittel (16) bistabil sind, umfassend eine Außenbuchse (18), eine Innenbuchse (21), die teleskopartig in die Außenbuchse (8) eingesetzt ist und eine Feder (24), die innerhalb der Innen- und Außenbuchse (21, 18) untergebracht ist und auf gegenüberliegenden Seiten gegen die entsprechenden Bodenwandungen (25, 26) der Buchsen (18, 21) wirkt,
(ii) das Stützteil (11) einstückig mit einer Seitenwandung (12) des Raumes (2) ausgebildet ist und einen ersten Bügel (34) hält, der an seinen gegenüberliegenden Enden (37) zwei zurückgeschlagene Ansätze (38) mit entsprechenden Löchern (41) zur Aufnahme der entsprechenden Enden des Stiftes (15) aufweist,
(iii) der Stift (15) gebildet ist aus einem gekröpften Stab, der von einem zweiten Trägerteil (43) gehalten wird. welcher als Einheit an der Klappe (4) befestigt ist, wobei der Stab (15) einen Mittelabschnitt (42) aufweist, der zurückgebogen ist und in bezug auf eine Innenfläche (44) der Klappe (4) erhaben ist, und
(iv) wobei die Außenbuchse (18) und die Innenbuchse (21) zwischen den Stab (15) und einer konkaven Stütze (33) eingesetzt sind, welche von dem ersten Bügel (21) in gelenkiger Weise mit der konkaven Stütze zusammenwirkt und die Außenhuchse (18) in gelenkiger Weise mit dem Stab (15) zusammenwirkt, wobei dessen abgekröpfter Mittelabschnitt (42) als Stütze für die Außenbuchse (18) wirkt, so daß die Klappe (4) in der zweiten Betriebsstellung festgelegt wird durch das bistabile elastische Mittel (16) mit einem korrespondierenden Öffnungswinkel von im wesentlichen über 90°.

2. Abdeckmittel (1) nach Anspruch 1, dadurch gekennzeichnet, daß die Außen (18) und Innenbuchse (21) mit Bewegungsfreiheit ineinander gesetzt sind, in einer solchen Weise, daß sie relativ schräge Positionen mit entsprechenden Symmetrieachsen einnehmen können, die einen Winkel zwischen sich bilden.

3. Abdeckmittel nach Anspruch 1 oder 2. dadurch gekennzeichnet, daß die Außenbuchse (18) auf einer inneren Seitenfläche (27), welche der Innenbuchse (21) zugewandt ist. eine Vielzahl von Nasen (28) in einer im wesentlichen äquivalenten Anordnung auf der Innenfläche (27) aufweist, wobei die Nasen entsprechend im wesentlichen halbkreisförmige Querschnitte aufweisen.

4. Abdeckmittel (1) nach einem der vorhergehenden Ansprüche, dadurch gekennzeichnet, daß die Innenbuchse (21) auf ihrer Außenfläche (31) ihrer Bodenwandung (26) mit entsprechenden Mitteln (32) zur Befestigung an dem ersten Bügel (34) versehen ist. wobei die Außenbuchse (18) auf einer Außenseite (35) ihrer Bodenwandung (25) mit entsprechenden Mitteln (36) zur Befestigung an das zweite Trägerteil versehen ist.

5. Abdeckmittel (1) nach Anspruch 4, dadurch gekennzeichnet, daß das erste Trägerteil aus einem zweiten Bügel (11) besteht, der innerhalb des Aufnahmeraumes (2) befestigt und als Ganzes mit dem ersten Bügel (34) verbunden ist, und daß die konkave Stütze von dem ersten Bügel (34) abragt und zusammen mit einer entsprechend halbtonnenförmig geformten Ausladung (32) zusammenwirkt, die auf der Außenfläche (31) der Bodenwandung (26) der Innenbuchse (21) vorgesehen ist.

6. Abdeckmittel (1) nach einem der vorhergehenden Ansprüche, dadurch gekennzeichnet, daß das zweite Trägerteil (43) aus einer Platte (43) besteht, die als Ganzes an der Klappe (4) befestigt ist und den gekröpften Stab (15), der den Stift bildet, hält.

## Revendications

1. Moyen (1) pour protéger un espace (2) logeant un conduit de remplissage (3) pour véhicule, du type comprenant une porte (4) ayant la forme d'une ouverture (7) sur ledit espace (2) et moyen (8) articulant la porte (4) sur un élément de support (11), ledit moyen formant charnière (8) étant tel qu'il permet à ladite porte (4) d'adopter sélectivement une première position de fonctionnement (13) dans laquelle la porte (4) s'aligne avec ladite ouverture (7) sur ledit espace (2), la fermant, et une seconde position de fonctionnement (14) dans laquelle la porte (4) fait saillie sur le côté dudit espace (2) pour découvrir ledit conduit de remplissage (3) ; ledit moyen formant charnière (8) comprenant un axe (15) pour fixer de manière mobile en rotation autour d'un axe prédéterminé ladite porte (4) audit élément de support (11), et des moyens élastiques (16) pour positionner ladite porte (4) ;
caractérisé en ce que, en association :
(i) - lesdits moyens élastiques (16) sont bistables, comprenant un manchon extérieur (18), un manchon intérieur (21) inséré de manière télescopique à l'intérieur du manchon extérieur (18) et un ressort (24) logé à l'intérieur à la fois du manchon intérieur et extérieur (21, 18) et coopérant sur ses côtés opposés avec les parois de fond correspondantes (25, 26) desdits manchons (18, 21) ;
(ii)- ledit élément de support (11) est d'un seul tenant avec une paroi latérale (12) dudit espace (2) et supporte un premier support (34) ayant au niveau de ses extrémités opposées (37) deux oreilles pliées vers l'arrière (38) pourvues de trous correspondants (41) pour loger les extrémités correspondantes dudit axe (15) ;
(iii)- ledit axe (15) est formé par une barre coudée vers l'arrière supportée par un second élément de support (43) fixé d'un seul tenant à ladite porte (4), ladite barre (15) ayant une partie intermédiaire (42) qui est coudée vers l'arrière et dressée vers le haut par rapport à une face intérieure (44) de ladite porte (4) ; et
(iv) - lesdits manchon extérieur (18) et manchon intérieur (21) étant insérés entre ladite barre (15) et un support concave (33) qui fait saillie à partir dudit premier support (34), ledit manchon intérieur (21) coopérant de façon articulée avec ledit support concave (33) et ledit manchon extérieur (18) coopérant de façon articulée avec ladite barre (15), ladite partie intermédiaire coudée vers l'arrière (42) agissant comme support pour ledit manchon extérieur (18) ;
de sorte que ladite porte (4), dans ladite seconde position de fonctionnement, est positionnée par lesdits moyens élastiques bistables (16) à un angle d'ouverture correspondant sensiblement au-dessus de 90°.

2. Moyen de protection (1) selon la revendication 1, caractérisé en ce que lesdits manchons extérieur (18) et intérieur (21) sont insérés l'un dans l'autre avec liberté de mouvement, de telle manière qu'ils peuvent adopter des positions relatives obliques avec des axes de symétrie correspondants qui forment un angle entre eux.

3. Moyen de protection (1) selon la revendication 1 ou 2, caractérisé en ce que ledit manchon extérieur (18) a sur sa surface latérale intérieure (27) qui fait face audit manchon intérieur (21) une pluralité de saillies (28) en un agencement écarté sensiblement de manière égale sur ladite surface intérieure (27), lesdites saillies ayant des sections transversales correspondantes sensiblement semi-circulaires.

4. Moyen de protection (1), selon l'une des revendications précédentes, caractérisé en ce que ledit manchon intérieur (21) est pourvu sur une surface extérieure (31) de sa paroi de fond (26) d'un moyen correspondant (32) de fixation audit premier support (34), ledit manchon extérieur (18) étant pourvu sur une face extérieure (35) de sa paroi de fond (25) d'un moyen correspondant (36) de fixation audit second élément de support (43).

5. Moyen de protection (1) selon la revendication 4, caractérisé en ce que ledit premier élément de support se compose d'un second support (11) fixé à l'intérieur dudit espace de logement (2) et relié d'un seul tenant audit premier support (34) ; et en ce que ledit support concave (33) fait saillie à partir dudit premier support (34) et coopère avec une saillie en forme de demi-cylindre correspondante (32) située sur ladite face extérieure (31) de ladite paroi de fond (26) dudit manchon intérieur (21).

6. Moyen de protection (1) selon l'une des revendications précédentes, caractérisé en ce que ledit second élément de support (43) se compose d'une plaque (43) fixée d'un seul tenant à ladite porte (4) et supportant ladite barre coudée vers l'arrière (15) formant ledit axe.
